# EUROPÄISCHE PATENTANMELDUNG

(11) **EP 4 800 433 A1**
(43) Veröffentlichungstag der Anmeldung: **02.09.2026**
(21) Anmeldenummer: 25160173.8
(22) Anmeldetag: 26.02.2025
(51) Int. Cl.: G01S 7/481, G01S 17/42

(54) **DISTANZSENSOR UND VERFAHREN ZUM BETREIBEN EINES DISTANZSENSORS**

(71) Anmelder: SICK AG, 79183 Waldkirch (DE)
(72) Erfinder: Schneider, Georg, 20535 Hamburg (DE); Diebel, Falko, 22175 Hamburg (DE)
(74) Vertreter: Manitz Finsterwald Patent- und Rechtsanwaltspartnerschaft mbB

(57) **Zusammenfassung**

Die vorliegende Erfindung betrifft einen Distanzsensor zum Erfassen von Objekten in einem Überwachungsbereich, mit einer Sendeanordnung zum Aussenden von Sendelichtsignalen entlang eines Sendelichtpfads in den Überwachungsbereich mit einer Empfangsanordnung, umfassend eine Empfangsoptik, welche eine optische Achse aufweist und zum Fokussieren von Empfangslichtsignalen, die von einem im Überwachungsbereich anwesenden Objekt durch Remission auftreffender Sendelichtsignale erzeugt werden und sich zwischen dem Objekt und der Empfangsanordnung entlang eines Empfangslichtpfads ausbreiten, in einem Empfangslichtfleck eingerichtet ist, und einen Lichtempfänger, welcher eine lichtempfindliche Fläche aufweist und zum Detektieren des Empfangslichtflecks eingerichtet ist, und mit einer mit dem Lichtempfänger verbundenen Auswerteeinheit, welche dazu eingerichtet ist, eine Distanz des erfassten Objekts von dem Distanzsensor in Abhängigkeit von der Lichtlaufzeit der ausgesendeten und empfangenen Lichtsignale zu ermitteln. Erfindungsgemäß sind die lichtempfindliche Fläche und die Empfangsoptik quer zu der optischen Achse der Empfangsoptik relativ zueinander derart versetzt angeordnet, dass die optische Achse der Empfangsoptik die lichtempfindliche Fläche nicht schneidet, so dass ein oder mehrere Geisterabbilder des Empfangslichtflecks, welche durch unerwünschte Reflexionen der Empfangslichtsignale an Grenzflächen der Empfangsoptik erzeugt werden, zumindest innerhalb eines vorgegebenen Arbeitsabstandsbereichs nicht auf die lichtempfindliche Fläche treffen. Die Erfindung betrifft ferner ein entsprechendes Verfahren zum Justieren oder Betreiben eines Distanzsensors.

## Beschreibung

Die vorliegende Erfindung betrifft einen Distanzsensor zum Erfassen von Objekten in einem Überwachungsbereich, mit einer Sendeanordnung zum Aussenden von Sendelichtsignalen entlang eines Sendelichtpfads in den Überwachungsbereich mit einer Empfangsanordnung, umfassend eine Empfangsoptik, welche eine optische Achse aufweist und zum Fokussieren von Empfangslichtsignalen, die von einem im Überwachungsbereich anwesenden Objekt durch Remission auftreffender Sendelichtsignale erzeugt werden und sich zwischen dem Objekt und der Empfangsanordnung entlang eines Empfangslichtpfads ausbreiten, in einem Empfangslichtfleck eingerichtet ist, und einen Lichtempfänger, welcher eine lichtempfindliche Fläche aufweist und zum Detektieren des Empfangslichtflecks eingerichtet ist, und mit einer mit dem Lichtempfänger verbundenen Auswerteeinheit, welche dazu eingerichtet ist, eine Distanz des erfassten Objekts von dem Distanzsensor in Abhängigkeit von der Lichtlaufzeit der ausgesendeten und empfangenen Lichtsignale zu ermitteln.

Ein derartiger distanzmessender optoelektronischer Sensor, bei dem eine lichtlaufzeitbasierte Abstandsmessung mit einer Abtastung des Überwachungsbereichs kombiniert ist, wird auch als LIDAR-Sensor (LIDAR: abgekürzt für englisch "Light Detection And Ranging") bezeichnet. Die Lichtsignale können in Form eines Sendelichtbündels als Lichtpulse oder auch als kontinuierliche Lichtsignale ausgesendet werden. Treffen die Sendelichtsignale bzw. das Sendelichtbündel auf ein Objekt, wird zumindest ein Teil des auftreffenden Sendelichts in Richtung der Empfangsanordnung remittiert, wobei die Remission in Abhängigkeit von der Oberflächenbeschaffenheit des erfassten Objekts spiegelnd reflektierend oder diffus gestreut erfolgt. Die remittierten Sendelichtsignale werden als Empfangslichtsignale von der lichtempfindlichen Fläche des Lichtempfängers erfasst und in entsprechende elektrische Empfangssignale umgewandelt. In der Auswerteeinheit können die elektrischen Empfangssignale weiterverarbeitet und es kann gegebenenfalls ein Objekterfassungssignal ausgegeben werden. Das Objekterfassungssignal kann Informationen über die Distanz des Objekts vom Distanzsensor umfassen und/oder es kann seine Erzeugung von der Distanz abhängen, beispielsweise beim Über- oder Unterschreiten eines Distanzschwellenwerts.

Die Sendeanordnung umfasst eine Lichtquelle, wobei als Lichtquelle unter anderem LEDs, Laser, Laserdioden oder VCSEL (abgekürzt für englisch "Vertical Cavity Surface Emitting Laser", eine Bauform eines Oberflächenemitters) eingesetzt werden können. Die Sendelichtanordnung kann die Sendelichtsignale derart erzeugen, dass im Überwachungsbereich ein Sendelichtfleck auf ein gegebenenfalls dort anwesendes Objekt projiziert wird, wobei der Sendelichtfleck unterschiedliche Formen aufweisen kann. Je nach Ausgestaltung der Sendeanordnung kann der Sendelichtfleck z.B. kreisförmig, elliptisch oder linienförmig sein. Auch ein Sendelichtfleck, der sich aus mehreren z.B. in Reihe angeordneten Teillichtflecken zusammensetzt, ist möglich. Weiterhin kann insbesondere ein längsausgedehnter Sendelichtfleck auch durch Scannen eines punkt- oder kreisförmigen Lichtflecks oder durch ein sequentielles Aktivieren von mehreren Einzellichtquellen, die in einer Reihe oder in einer anderen Geometrie angeordnet sind, erzeugt werden.

Als Lichtempfänger können beispielsweise Fotodioden, Avalanche-Fotodioden, Fotodiodenzeilen, SPAD-Arrays (SPAD: abgekürzt für englisch "Single Photon Avalanche Diode"), CMOS-Arrays oder dergleichen eingesetzt werden.

Mittels der Empfangsoptik können die Empfangslichtsignale fokussiert oder gebündelt werden, so dass auf dem Lichtempfänger ein Empfangslichtfleck erzeugt wird, welcher in der Regel ein Abbild des auf einem anwesenden Objekt erzeugten Sendelichtflecks darstellt. Die Wellenlänge des Sendelichts kann sowohl im sichtbaren als auch im nicht sichtbaren Bereich, beispielsweise im Infrarotbereich, liegen.

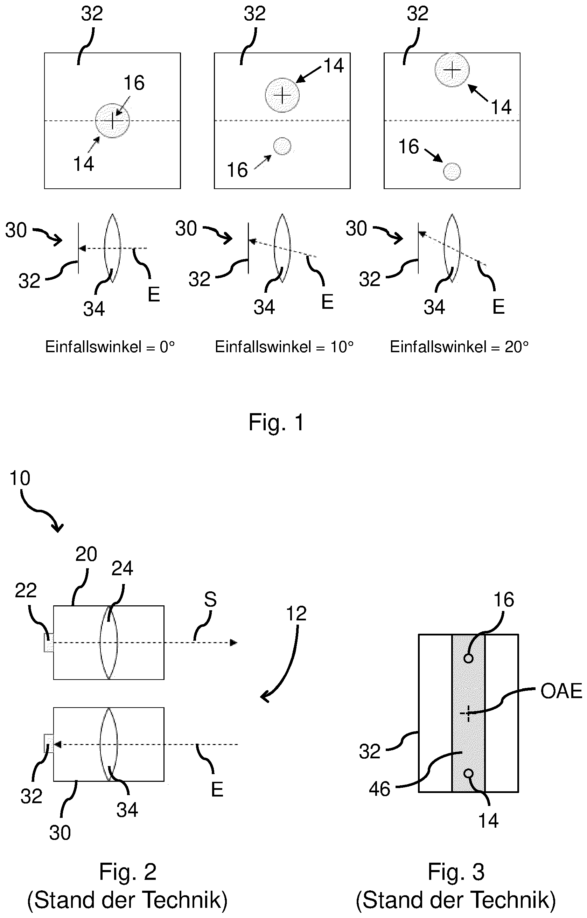

Die Empfangsoptik der Empfangsanordnung kann eine oder mehrere optische Linsen umfassen. Da bei realen optischen Linsen die Transmission stets unterhalb des Idealwerts von 100 % liegt, können an den Grenzflächen der Linsen Reflexionen auftreten. Diese Linsenreflexionen, die auch als Rückreflexionen, Streulicht oder im Englischen als "lens flare" bezeichnet werden, können zu Geisterabbildern des Empfangslichtflecks auf dem Lichtempfänger führen. Wenn der Einfallswinkel 0° beträgt, d.h. der Hauptstrahl des Empfangslichtbündels mit der optischen Achse der Empfangsoptik zusammenfällt, werden der eigentliche Empfangslichtfleck sowie dessen Geisterabbild in der Regel am selben Ort auf den Lichtempfänger projiziert. Fällt jedoch das Empfangslicht schräg auf die Empfangsoptik, so treffen der Empfangslichtfleck und dessen Geisterabbild an unterschiedlichen Orten auf den Lichtempfänger. Dieser Zusammenhang wird weiter unten noch mit Bezug auf Fig. 1 näher erläutert.

In Abhängigkeit vom jeweiligen Anwendungsfall, insbesondere bei großen Unterschieden zwischen den zu erfassenden Distanzen oder bei variierenden Oberflächeneigenschaften der zu erfassenden Objekte können die Empfangslichtsignale einen sehr großen Dynamikumfang ausweisen. Bei Objekten in kurzen Distanzen oder mit einer stark reflektierenden Oberfläche, z. B. einer spiegelnden oder mit Retroreflektoren versehenen Oberfläche, können die Empfangslichtsignale eine sehr hohe Signalintensität aufweisen, so dass auch Geisterabbilder eine vergleichsweise hohe Signalstärke aufweisen, welche die Ergebnisse der Distanzmessungen verfälschen oder diese sogar unmöglich machen können.

Bei vielen Bauformen von gattungsgemäßen Distanzsensoren erfolgt die Erfassung der Empfangslichtsignale ortsaufgelöst, d.h. der Lichtempfänger weist eine Vielzahl von lichtempfindlichen Elementen auf, welche in Form einer Zeile, einer Spalte oder eines zweidimensionalen Arrays angeordnet sind. Insbesondere bei dieser ortsaufgelösten Erfassung der Empfangslichtsignale wirken sich etwaige Geisterabbilder des Empfangslichtflecks besonders ungünstig aus und führen zu einer fehlerhaften Objekterfassung.

Grundsätzlich lässt sich der Effekt der Linsenreflexionen durch Aufbringen von reflexmindernden Beschichtungen auf den Linsenoberflächen reduzieren. Allerdings steigen die Kosten für solche Antireflexionsbeschichtungen mit zunehmender Wirksamkeit stark an, wobei selbst mit sehr hoch wirksamen Antireflexionsbeschichtungen eine vollständige Elimination von Geisterabbildern praktisch nicht erreicht werden kann.

Bei mehrkanaligen Lichtempfängern, d.h. bei Lichtempfängern mit mehreren lichtempfindlichen Elementen, kann durch ein sequentielles Auslesen der Empfangselemente eine Erkennung und Eliminierung der Geisterabbilder erfolgen. Durch das sequenzielle Auslesen verlängert sich jedoch in nachteiliger Weise die für das Auslesen benötigte Zeit, so dass die Erfassungsrate entsprechend vermindert ist.

In EP 2 708 914 A1 ist ein optoelektronischer Sensor beschrieben, bei dem ein Sendelichtstrahl zur Abtastung einer Szene mittels eines MEMS-Spiegels in zwei Raumrichtungen abgelenkt wird. In Abhängigkeit von der Ablenkposition werden nur die Lichtempfangselemente innerhalb einer erwarteten Position des Empfangslichtflecks aktiviert.

In US 11,982,765 B2 ist ein Ansatz zur Reduktion von Lichtreflexionen bei LIDAR-Sensoren beschrieben, der auf einer Quantifizierung der Rückreflexionseffekte basiert.

Bei dem in US 2022/0120869 A1 offenbarten LIDAR-System erfolgt eine Unterdrückung von Geisterabbildern mit Hilfe von mehreren reflektierenden Flächen und Blenden, welche zwischen der Empfangsoptik und dem Lichtempfänger angeordnet sind.

Bei dem in US 2022/0221566 A1 beschriebenen LIDAR-System beruht das Ausfiltern von Rückreflexionen auf der Ausnutzung von abweichenden spektralen Eigenschaften der Geistersignale. Bei diesem LIDAR-System werden Signale eingesetzt, bei denen die Sendelichtsignale mit einer zeitlich sich ändernden Frequenz moduliert sind (sogenannte Chirp-Signale).

Es ist die Aufgabe der Erfindung, einen Distanzsensor anzugeben, welcher unempfindlich gegenüber einer Detektion von Geisterabbildern des Empfangslichtflecks ist.

Die Lösung der Aufgabe erfolgt durch einen Distanzsensor mit den Merkmalen des Anspruchs 1. Erfindungsgemäß ist vorgesehen, dass die lichtempfindliche Fläche und die Empfangsoptik quer zu der optischen Achse der Empfangsoptik relativ zueinander derart (insbesondere in einer Richtung senkrecht zur optischen Achse der Empfangsoptik) versetzt angeordnet sind, dass die optische Achse der Empfangsoptik die lichtempfindliche Fläche nicht schneidet, so dass ein oder mehrere Geisterabbilder des Empfangslichtflecks, welche durch unerwünschte Reflexionen der Empfangslichtsignale an Grenzflächen der Empfangsoptik erzeugt werden, zumindest innerhalb eines vorgegebenen Arbeitsabstandsbereichs nicht auf die lichtempfindliche Fläche treffen.

Die optische Achse der Empfangsoptik schneidet somit eine Erstreckungsebene der lichtempfindlichen Fläche außerhalb der lichtempfindlichen Fläche.

Die Sendeanordnung und die Empfangsanordnung können beispielsweise in einer Biaxialanordnung konfiguriert sein, d.h. die Sendeanordnung und die Empfangsanordnung sind quer zum Empfangslichtpfad voneinander beabstandet angeordnet. Alternativ können die Sendeanordnung und die Empfangsanordnung in einer Koaxialanordnung konfiguriert sein, d.h. der Sendelichtpfad und der Empfangslichtpfad fallen abschnittsweise zusammen.

Bei dem erfindungsgemäßen Distanzsensor, welcher insbesondere als LIDAR-Sensor ausgebildet sein kann, erfolgt die Messung der Distanz in Abhängigkeit von der Lichtlaufzeit. Dies wird auch als sogenannte TOF-Messung bezeichnet (TOF: von englisch "Time Of Flight"). Unter der Lichtlaufzeit der ausgesendeten und empfangenen Lichtsignale wird insbesondere die Summe der Lichtlaufzeit der Sendelichtsignale zwischen dem Aussenden und dem Auftreffen auf dem erfassten Objekt und der Lichtlaufzeit der Empfangslichtsignale zwischen dem Remittieren durch das Objekt und dem Auftreffen auf dem Lichtempfänger verstanden. Der Lichtempfänger kann ein oder mehrere lichtempfindliche Empfangselemente aufweisen und insbesondere als Zeilenempfänger oder 2D-Array ausgestaltet sein.

Aufgrund des Relativersatzes zwischen der lichtempfindlichen Fläche und der Empfangsoptik verläuft erfindungsgemäß der Empfangslichtpfad, welcher insbesondere durch die Hauptachse des Empfangslichtbündels definiert sein kann, schräg zu der optischen Achse der Empfangsoptik. Der Relativversatz kann derart gewählt werden, dass der Winkel zwischen dem Empfangslichtpfad und der optischen Achse bzw. der vorstehend definierten Ebene bevorzugt weniger als ein Grad bis einige Grad beträgt (insbesondere weniger als 5 bis 10°), wobei der genaue Winkel von Parametern wie der Brennweite der Empfangsoptik und der Größe der lichtempfindlichen Fläche sowie dem vorgegebenen Arbeitsabstandsbereich abhängen kann. Das Maß dieses Winkels kann beispielsweise rechnerisch oder auch experimentell ermittelt werden. Prinzipiell kann mit größeren Winkeln eine stärkere Reduktion der Geisterabbilder erzielt werden, wobei jedoch unter Umständen die Abbildungsqualität nachteilig beeinflusst werden kann.

Die lichtempfindliche Fläche wird derart versetzt angeordnet, dass zwar der Empfangslichtfleck auch bei unterschiedlichen Arbeitsabständen von der lichtempfindlichen Fläche erfasst wird, die Geisterabbilder des Empfangslichtflecks jedoch den Lichtempfänger oder zumindest dessen lichtempfindliche Fläche nicht treffen. So können zum Beispiel bei Biaxialanordnungen typischerweise aufgrund variierender Objektabstände auftretende Variationen des Auftrefforts des Empfangslichtflecks auf der lichtempfindlichen Fläche durch entsprechende Auslegung des Distanzsensors, insbesondere durch eine ausreichend große Dimensionierung der lichtempfindlichen Fläche, berücksichtigt werden, so dass zumindest für alle innerhalb des vorgegebenen Arbeitsabstandsbereichs gelegenen Objektabstände zwar die Empfangslichtflecke erfasst, aber die Geisterabbilder ausgeblendet werden.

Die Einschränkung, dass die Geisterabbilder zumindest innerhalb eines vorgegebenen Arbeitsabstandsbereichs nicht auf die lichtempfindliche Fläche treffen, ist insofern so zu verstehen, dass unter Umständen bei Objekten, die außerhalb des Arbeitsabstandsbereichs liegen, d.h. bei Objekten in sehr kurzen oder sehr langen Distanzen, die Bedingung, dass Geisterabbilder des Empfangslichtflecks nicht auf die lichtempfindliche Fläche treffen dürfen, nicht oder zumindest nicht für jedes Geisterabbild erfüllt sein muss. In der Regel ist der Arbeitsabstandsbereich eines optoelektronischen Sensors dadurch definiert, dass für Objekte, die sich innerhalb des Arbeitsabstandsbereichs befinden, auch unter widrigen äußeren Bedingungen eine zuverlässige Objekterfassung gewährleistet ist. Grundsätzlich kann der Arbeitsabstandsbereich abhängig von der konkreten Anwendung aber auch kleiner gewählt werden. Für Objekte in sehr kurzen oder sehr langen Abständen, bei denen aus geometrischen Gründen bzw. aufgrund der abstandsbedingten Signalabschwächung ohnehin keine zuverlässige Erfassung möglich ist, muss auch nicht zwingend eine Eliminierung von Geisterabbildern vorgesehen sein.

Für eine Bestimmung des Relativversatzes zwischen der lichtempfindlichen Fläche und der optischen Achse der Empfangsoptik kann hinsichtlich der (Relativ-)Position der lichtempfindlichen Fläche vorzugsweise auf den Mittelpunkt der lichtempfindlichen Fläche als Bezugspunkt Bezug genommen werden. Mit anderen Worten kann sich der Relativversatz insbesondere auf einen Abstand zwischen dem Schnittpunkt der optischen Achse der Empfangsoptik mit der Erstreckungsebene der lichtempfindlichen Fläche und dem vorstehend genannten Mittelpunkt der lichtempfindlichen Fläche beziehen.

Da der Empfangslichtpfad schräg auf die Empfangsoptik trifft, kann es gegebenenfalls sinnvoll sein, dass der gesamte Distanzsensor bzw. zumindest die Empfangsanordnung um einen entsprechenden Winkel verschwenkt positioniert werden, so dass die Lichtpfade die gleiche räumliche Lage im Überwachungsbereich aufweisen wie bei einem herkömmlichen Distanzsensor, bei dem die Lichtpfade im Wesentlichen senkrecht zu den Hauptebenen der Optiken verlaufen.

Gemäß einer bevorzugten Ausgestaltung ist auf einer jeweiligen virtuellen, senkrecht zu der optischen Achse der Empfangsoptik verlaufenden Hilfsfläche ein erfassbarer Sichtbereich derart definiert, dass alle innerhalb des erfassbaren Sichtbereichs erzeugten Empfangslichtsignale auf die lichtempfindliche Fläche treffen und alle außerhalb des erfassbaren Sichtbereichs erzeugten Empfangslichtsignale nicht auf die lichtempfindliche Fläche treffen, und die Sendeanordnung ist derart konfiguriert, dass zumindest innerhalb des vorgegebenen Arbeitsabstandsbereichs die Sendelichtsignale im Wesentlichen innerhalb des erfassbaren Sichtbereichs auf die virtuelle Hilfsfläche treffen.

Diese virtuelle Hilfsfläche ist eine gedachte, orthogonal zur optischen Achse der Empfangsoptik verlaufende Fläche, die zumindest innerhalb des vorgegebenen Arbeitsabstandsbereichs grundsätzlich einen beliebigen Abstand zum Distanzsensor aufweisen kann. Der erfassbare Sichtbereich kann insbesondere als eine Teilfläche einer solchen Hilfsfläche aufgefasst werden, die durch eine virtuelle, mittels der Empfangsoptik erzeugte Rückprojektion der Kontur der lichtempfindlichen Fläche auf die genannte virtuelle Hilfsfläche umgrenzt ist. Nur solche Sendelichtsignale, die an einer sich innerhalb dieser Rückprojektion der Kontur befindenden Objektoberfläche remittiert werden, treffen auf die lichtempfindliche Fläche und können erfasst werden. Durch die vorstehende Definition wird insbesondere auch ein Raumwinkelbereich definiert, in dem sich Objekte befinden müssen, damit sie von der lichtempfindlichen Fläche "gesehen" werden. Somit kann der bei einem jeweiligen Objektabstand erfassbare Sichtbereich auch als eine Schnittfläche zwischen dem Raumwinkelbereich und einer in diesem Objektabstand gelegenen virtuellen Hilfsfläche verstanden werden. Gemäß den Gesetzen der geometrischen Optik hängt die Größe des erfassbaren Sichtbereichs vom jeweiligen Objektabstand ab.

Grundsätzlich wird nicht die gesamte erfassbare Hilfsfläche mit den Sendelichtsignalen ausgeleuchtet, sondern nur ein bestimmter Teilbereich. Die Bedingung, dass die Sendelichtsignale "im Wesentlichen" innerhalb des erfassbaren Sichtbereichs auf die gedachte Hilfsfläche treffen, ist insbesondere so zu verstehen, dass ein Großteil der Sendelichtsignale, bevorzugt mehr als 50% der Intensität, weiter bevorzugt mehr als 75%, innerhalb des erfassbaren Sichtbereichs auftrifft.

Gemäß einer weiteren bevorzugten Ausgestaltung ist auf einer jeweiligen virtuellen, senkrecht zu der optischen Achse der Empfangsoptik verlaufenden Hilfsfläche ein erfassbarer Sichtbereich derart definiert, dass alle innerhalb des erfassbaren Sichtbereichs erzeugten Empfangslichtsignale auf die lichtempfindliche Fläche treffen und alle außerhalb des erfassbaren Sichtbereichs erzeugten Empfangslichtsignale nicht auf die lichtempfindliche Fläche treffen, und die Sendeanordnung ist derart konfiguriert, dass zumindest innerhalb des vorgegebenen Arbeitsabstandsbereichs keine Sendelichtsignale innerhalb eines Komplementärbereichs auf die gedachte Hilfsfläche treffen, wobei der Komplementärbereich durch eine Punktspiegelung des erfassbaren Sichtbereichs am Schnittpunkt der optischen Achse der Empfangsoptik mit der virtuellen Hilfsfläche definiert ist.

Sendelichtsignale, die innerhalb dieses Komplementärbereichs in Richtung der Empfangsanordnung remittiert werden würden, würden zwar nicht direkt auf die lichtempfindliche Fläche treffen, könnten aber mit hoher Wahrscheinlichkeit Geisterabbilder erzeugen, die in unerwünschter Weise auf die lichtempfindliche Fläche treffen würden. Durch die Beschränkung der Ausleuchtung mit Sendelicht auf Bereiche außerhalb des Komplementärbereichs wird das unerwünschte Erfassen von Geisterabbildern verhindert.

Gemäß einer weiteren bevorzugten Ausführungsform ist das Maß eines Versatzes zwischen der lichtempfindlichen Fläche und der optischen Achse der Empfangsoptik veränderbar, wobei das versetzte Anordnen bevorzugt durch ein Versetzen der lichtempfindlichen Fläche und/oder der Empfangsoptik bewirkbar ist. Dadurch ist es möglich, die Ausblendung der Geisterbilder an die jeweilige konkrete Einsatzsituation des Distanzsensors anzupassen, beispielsweise um die Ausblendung für bestimmte Arbeitsabstände zu optimieren. Bevorzugt ist die Empfangsoptik lateral, d.h. quer zu ihrer optischen Achse, versetzbar. Grundsätzlich kann auch alternativ oder zusätzlich die Lateralposition der lichtempfindlichen Fläche verändert werden.

Gemäß einer weiteren bevorzugten Ausführungsform ist das versetzte Anordnen der lichtempfindlichen Fläche bezüglich der optischen Achse der Empfangsoptik durch ein versetztes Anordnen des Lichtempfängers bewirkt. Mit anderen Worten kann der gesamte Lichtempfänger mechanisch quer zur optischen Achse der Empfangsoptik verschoben werden.

Gemäß einer weiteren bevorzugten Ausführungsform weist der Lichtempfänger eine Vielzahl von wahlweise aktivierbaren oder deaktivierbaren Empfangselementen auf, wobei die lichtempfindliche Fläche durch eine Gesamtheit der aktivierten Empfangselemente gebildet ist, und wobei das versetzte Anordnen der lichtempfindlichen Fläche bezüglich der optischen Achse der Empfangsoptik durch Aktivieren nur einer Teilmenge der Empfangselemente bewirkt ist. Beispielsweise kann der Lichtempfänger ein zweidimensionales Array mit in Reihen und Spalten angeordneten Empfangselementen aufweisen, wobei die lichtempfindliche Fläche durch eine oder einige wenige aktivierte Zeilen bzw. Spalten definiert ist. Das Verändern des Maßes eines Versatzes zwischen der lichtempfindlichen Fläche und der optischen Achse der Empfangsoptik kann somit dadurch erfolgen, dass unterschiedliche Teilbereiche des Lichtempfängers aktiviert werden. Die nicht zur lichtempfindlichen Fläche gehörenden Empfangselemente sind deaktiviert, wobei das Deaktivieren insbesondere auch durch ein Nichtauslesen oder ein Nichtberücksichtigen der entsprechenden Pixel des Lichtempfängers bei der Auswertung erfolgen kann. Bei dieser bevorzugten Ausführungsform kann der Versatz der lichtempfindlichen Fläche relativ zur optischen Achse elektronisch variiert werden. Der Lichtempfänger selbst muss mechanisch nicht versetzt werden, so dass sich der konstruktive Aufbau des Distanzsensors vereinfacht. Die Teilmenge bzw. der Teilbereich der aktivierten Empfangselemente ist bevorzugt zusammenhängend.

Gemäß einer weiteren bevorzugten Ausführungsform umfasst die Sendeanordnung eine Lichtquelle und eine Sendeoptik, welche eine optische Achse aufweist, wobei die Lichtquelle und die Sendeoptik quer zu der optischen Achse der Sendeoptik derart relativ zueinander versetzt angeordnet sind, dass ein oder mehrere Geisterabbilder des Sendelichtflecks auf dem Objekt, welche durch unerwünschte Reflexionen der Sendelichtsignale an Grenzflächen der Sendeoptik erzeugt werden, zumindest innerhalb eines vorgegebenen Arbeitsabstandsbereichs nicht von der Empfangsanordnung erfasst werden. Damit wird der Tatsache Rechnung getragen, dass im Sendelichtpfad durch unerwünschte Reflexionen der Sendeoptik, die eine oder mehrere Linsen umfassen kann, Geisterabbilder des Sendelichtflecks entstehen können und insbesondere auch auf eine Oberfläche eines Überwachungsbereich anwesenden Objekts projiziert und von dieser remittiert werden können. Derartige Geisterabbilder des Sendelichtflecks (die von den vorstehend genannten Geisterabbildern des Empfangslichtflecks zu unterscheiden sind) können unter Umständen als unerwünschte Doppelbilder des Empfangslichtflecks von der Empfangsanordnung erfasst werden, welche durch die erfindungsgemäße Ausgestaltung der Empfangsanordnung nicht eliminiert werden. Der Sendelichtpfad und die optische Achse der Sendeoptik verlaufen insbesondere schräg zueinander, wobei die Lichtquelle und der Sendelichtfleck nicht auf der optischen Achse der Sendeoptik liegen, sondern bevorzugt um ein jeweiliges vorgegebenes Maß von der optischen Achse der Sendeoptik beabstandet sind.

Gemäß einer weiteren bevorzugten Ausführungsform ist das Maß eines Versatzes zwischen der Lichtquelle und der optischen Achse der Sendeoptik veränderbar, wobei das versetzte Anordnen bevorzugt durch ein Versetzen der Lichtquelle und/oder der Sendeoptik bewirkbar ist. Mit anderen Worten sind die Lichtquelle und/oder die Sendeoptik bezüglich ihrer Lateralposition bezogen auf die optische Achse der Sendeoptik mechanisch justierbar. Alternativ ist es auch denkbar, dass sich die Lichtquelle aus mehreren unterschiedlich zur optischen Achse der Sendeoptik beabstandeten Einzellichtquellen zusammensetzt, wobei in Abhängigkeit von dem gewünschten Maß des Versatzes eine der Einzellichtquellen aktiviert wird.

Gemäß einer weiteren bevorzugten Ausführungsform schließen der Sendelichtpfad und die optische Achse der Sendeoptik einen Sendewinkel und der Empfangslichtpfad und die optische Achse der Empfangsoptik einen Empfangswinkel ein, wobei der Sendewinkel und der Empfangswinkel gleich groß sind. Somit verlaufen der Sendelichtpfad und der Empfangslichtpfad parallel zueinander. Bei der bevorzugten Ausgestaltung wird somit zwischen der Lichtquelle und der Sendeoptik ein Versatz erzeugt, der bevorzugt dem Versatz zwischen der lichtempfindlichen Fläche und der Empfangsoptik gleichgerichtet ist und bevorzugt auch das gleiche Maß aufweist, wobei hier nicht auf absolute Betragswerte des Versatzes abgestellt wird, sondern auf gleiche Austritts- bzw. Eintrittswinkel des Sendelichtpfads bzw. des Empfangslichtpfads. Grundsätzlich kann sich bei einem Einstellen bzw. Ändern des Versatzes die "Blickrichtung" des Distanzsensors verändern. Durch das gleichgerichtete Versetzen wird das Ausrichten des Distanzsensors bezüglich des Überwachungsbereichs vereinfacht, da die Relativlage von Sende- und Empfangslichtpfad zumindest weitgehend erhalten bleibt. Eine etwaige Änderung des Blickwinkels kann durch ein Ausrichten des Distanzsensors als Einheit kompensiert werden, ein separates Ausrichten von Sende- und Empfangseinheit ist nicht erforderlich.

Gemäß einer weiteren bevorzugten Ausführungsform ist der Distanzsensor als scannender Sensor ausgebildet, wobei zumindest der Sendelichtpfad, bevorzugt auch der Empfangslichtpfad, um zumindest eine Drehachse rotiert und/oder periodisch verschwenkt wird, um den Überwachungsbereich periodisch zur Erfüllung der eigentlichen Sensorfunktion abzutasten. Das Rotieren bzw. periodische Verschwenken kann bei der Überwachung durch eine Rotation oder eine periodische Verschwenkung der Sende- und/oder Empfangsanordnung und/oder mittels eines rotierenden bzw. schwenkbaren Umlenkelements erfolgen. Bei dem angesprochenen periodischen Verschwenken im Rahmen der Abtastung eines Überwachungsbereichs handelt es sich um eine Rotation in einem begrenzten Winkelbereich mit periodisch wechselnder Drehrichtung.

Die vorliegende Erfindung bezieht sich in einem weiteren Aspekt gemäß den Merkmalen des nebengeordneten Anspruchs auf ein Verfahren zum Justieren beziehungsweise Betreiben eines Distanzsensors, welcher zum Erfassen von Objekten in einem Überwachungsbereich eingerichtet ist und umfasst: eine Sendeanordnung zum Aussenden von Sendelichtsignalen entlang eines Sendelichtpfads in den Überwachungsbereich, und eine Empfangsanordnung, umfassend zumindest eine Empfangsoptik, welche eine optische Achse aufweist und zum Fokussieren von Empfangslichtsignalen, die von einem im Überwachungsbereich anwesenden Objekt durch Remission auftreffender Sendelichtsignale erzeugt werden und sich zwischen dem Objekt und der Empfangsanordnung entlang eines Empfangslichtpfads ausbreiten, in einen Empfangslichtfleck eingerichtet ist, und einen Lichtempfänger, welcher eine lichtempfindliche Fläche aufweist und zum Detektieren des Empfangslichtflecks eingerichtet ist. Mit dem Distanzsensor wird eine Distanz des erfassten Objekts von dem Distanzsensor in Abhängigkeit von der Lichtlaufzeit der ausgesendeten und empfangenen Lichtsignale ermittelt. Die lichtempfindliche Fläche und die Empfangsoptik werden quer zu der optischen Achse der Empfangsoptik derart relativ zueinander versetzt angeordnet, dass die optische Achse der Empfangsoptik die lichtempfindliche Fläche nicht schneidet, so dass ein oder mehrere Geisterabbilder des Empfangslichtflecks, welche durch unerwünschte Reflexionen der Empfangslichtsignale an Grenzflächen der Empfangsoptik erzeugt werden, zumindest innerhalb eines vorgegebenen Arbeitsabstandsbereichs nicht auf die lichtempfindliche Fläche treffen.

Im Prinzip kann somit auch ein herkömmlicher Distanzsensor so modifiziert werden, dass mit der Durchführung des Verfahrens das dem erfindungsgemäßen Distanzsensor zugrundeliegende Prinzip umgesetzt werden kann.

Weitere Vorteile des erfindungsgemäßen Distanzsensors und des erfindungsgemäßen Verfahrens sowie vorteilhafte Ausführungsformen und Ausgestaltungen ergeben sich aus der folgenden Zeichnungsbeschreibung. Insbesondere stellen vorteilhafte Ausführungsformen des Distanzsensors auch vorteilhafte Ausgestaltungen des erfindungsgemäßen Verfahrens dar und umgekehrt.

In den Zeichnungen ist ein Ausführungsbeispiel der Erfindung dargestellt. Die Zeichnungen, die Beschreibung und die Ansprüche enthalten zahlreiche Merkmale in Kombination. Der Fachmann wird diese Merkmale zweckmäßigerweise auch einzeln betrachten und/oder zu sinnvollen weiteren Kombinationen zusammenfassen.

Es zeigen:
- Fig. 1: schematische Draufsichten auf eine lichtempfindliche Fläche eines Lichtempfängers sowie zugehörige Seitenansichten der entsprechenden Empfangsanordnungen für unterschiedliche Empfangswinkel;
- Fig. 2: eine schematische Ansicht eines Distanzsensors gemäß dem Stand der Technik;
- Fig. 3: eine Draufsicht auf die lichtempfindliche Fläche des Distanzsensors von Fig. 2;
- Fig. 4: eine schematische Ansicht eines Distanzsensors gemäß einem Ausführungsbeispiel; und
- Fig. 5: eine schematische perspektivische Ansicht der Empfangsanordnung einer Abwandlung des in Fig. 4 dargestellten Distanzsensors.

Zum besseren Verständnis des der Erfindung zugrundeliegenden Problems und der erfindungsgemäßen Lösung wird nachfolgend mit Bezug auf Fig. 1 zunächst der Einfluss von Lichtreflexionen an Grenzflächen einer Empfangsoptik 34 einer Empfangsanordnung 30 eines Distanzsensors 10 allgemein erläutert.

**In** Fig. 1 wird ein jeweiliges Empfangslichtbündel, welches von einem in einem Überwachungsbereich anwesenden Objekt (nicht dargestellt) remittiert wird, durch den Empfangslichtpfad E symbolisiert, wobei der Empfangslichtpfad E durch den zugehörigen, gestrichelt dargestellten Hauptstrahl repräsentiert ist. Der Einfallswinkel auf die Empfangsoptik 34 wird nachfolgend auch als Empfangswinkel bezeichnet.

Für einen Einfallswinkel von 0° fallen ein durch die Empfangsoptik 34 erzeugter Empfangslichtfleck 14 und ein durch Reflexionen an Grenzflächen der Empfangsoptik 34 erzeugtes Geisterabbild 16 des Empfangslichtflecks 14 zusammen und treffen mittig auf den Lichtempfänger 32 (bzw. dessen lichtempfindliche Fläche, die in Fig. 1 mit der Fläche des Lichtempfängers 32 identisch ist).

Mit zunehmendem Einfallswinkel (in Fig. 1 für einen Einfallswinkel von 10° und 20° dargestellt) entfernen sich der Empfangslichtfleck 14 und das Geisterabbild 16 in vertikaler Richtung voneinander, wobei der Abstand mit zunehmendem Einfallswinkel ebenfalls zunimmt. Das Auseinanderfallen von Empfangslichtfleck 14 und Geisterabbild 16 erfolgt hierbei punktsymmetrisch zu einem Schnittpunkt der optischen Achse der Empfangsoptik 34 mit dem Lichtempfänger 32.

Diese Punktsymmetrie, die in Fig. 1 nicht unmittelbar zu erkennen ist, wirkt sich so aus, dass sich für Empfangslichtpfade E, die, wie in den unteren Teilfiguren von Fig. 1 dargestellt, nicht nur innerhalb der Zeicheneben schräg zur optischen Achse verlaufen, sondern zusätzlich auch in einer hierzu orthogonalen Richtung, d.h. in der Darstellung von Fig. 1 zusätzlich einen von 0° verschiedenen Einfallswinkel relativ zu der Zeichenebene aufweisen, der Empfangslichtfleck 14 und dessen Geisterabbild 16 zusätzlich seitlich, d.h. in horizontaler Richtung, gegeneinander verschieben.

Mit Bezug auf Fig. 2 wird nun das der Erfindung zugrundeliegende Problem näher erläutert. Fig. 2 zeigt einen Distanzsensor 10 gemäß dem Stand der Technik. Der Distanzsensor 10 umfasst eine Sendeanordnung 20 mit einer Lichtquelle 22 und einer Sendeoptik 24 sowie eine Empfangsanordnung 30 mit einem Lichtempfänger 32 und einer Empfangsoptik 34. Das von der Lichtquelle 22 emittierte Sendelicht wird von der Sendeoptik 24 gebündelt und entlang eines Sendelichtpfads S in Richtung eines Überwachungsbereichs 12 emittiert. Treffen die Sendelichtsignale auf ein im Überwachungsbereich 12 anwesendes Objekt (nicht dargestellt), wird das Sendelicht in Form von Empfangslichtsignalen in Richtung des Distanzsensors 10 remittiert. Die Empfangslichtsignale breiten sich entlang eines Empfangslichtpfads E aus, werden von der Empfangsoptik 34 auf den Lichtempfänger 32 fokussiert und dort in elektrische Empfangssignale umgewandelt. Die Sendeanordnung 20 und die Empfangsanordnung 30 können mit einer Auswerte- und Steuereinheit (nicht dargestellt) verbunden sein, welche die elektrischen Empfangssignale auswertet und insbesondere auch die Lichtquelle 22 zur Ermittlung der Distanz zwischen Distanzsensor 10 und erfasstem Objekt auf der Grundlage des Lichtlaufzeitverfahrens ansteuert.

Sowohl der Sendelichtpfad S als auch der Empfangslichtpfad E fallen jeweils mit den optischen Achsen der Sendeoptik 24 bzw. der Empfangsoptik 34 zusammen. Die Sendeanordnung 20 und die Empfangsanordnung 30 sind im Beispiel der Fig. 2 lateral zueinander, d.h. in einer Querrichtung zu den optischen Achsen der Sendeoptik 24 bzw. der Empfangsoptik 34 versetzt zueinander angeordnet. Diese Anordnung wird auch als Biaxialanordnung bezeichnet. In der schematischen (und nicht maßstäblichen) Darstellung von Fig. 2 verlaufen der Sendelichtpfad S und der Empfangslichtpfad E parallel zueinander. Diese Parallelität ist in der Realität nur für ein unendlich weit entferntes Objekt gegeben. Bei realen Anordnungen befindet sich das Objekt näher am Distanzsensor 10. Der daraus resultierende Parallaxenfehler kann durch eine entsprechende Justierung bzw. Ausrichtung der Sendeanordnung 20 und/oder der Empfangsanordnung 30 kompensiert werden.

Durch die Sendeanordnung wird ein mehr oder weniger fokussierter Sendelichtfleck auf einem gegebenenfalls im Überwachungsbereich 12 vorhandenen Objekt erzeugt. Sofern der Sendelichtfleck zumindest annähernd punktförmig ist und auf der optischen Achse der Empfangsoptik 34 liegt, fallen der der Empfangslichtfleck 14 und dessen ggf. vorhandenes Geisterabbild 16 zusammen (vgl. die linke Teilfigur von Fig. 1 für einen Einfallswinkel von 0°). Wenn jedoch der Sendelichtfleck nicht punktförmig ist, z.B. linienförmig oder aus mehreren Teillichtflecken zusammengesetzt ist, oder z.B. aufgrund eines Parallaxenfehlers nicht auf der optischen Achse der Empfangsoptik 34 liegt, können der Empfangslichtfleck 14 und dessen ggf. vorhandenes Geisterabbild 16 an unterschiedlichen Orten auf den Lichtempfänger 32 treffen. Insbesondere bei einem längsausgedehnten Sendelichtfleck, wie er beispielsweise durch eine linienförmige Lichtquelle, durch eine Reihenanordnung von mehreren Teillichtquellen oder durch eine scannende Ablenkung eines Sendelichtstrahls erzeugt werden kann, können Fehler bei einer ortaufgelösten Detektion des Empfangslichtflecks 14 auftreten. Beispielsweise könnte ein Geisterlichtfleck 16 fälschlicherweise als ein weiterer Empfangslichtfleck interpretiert werden, der von einem vermeintlichen zusätzlichen, vom realen Objekt beabstandeten Objekt remittiert wurde.

Dies wird mit Bezug auf Fig. 3 näher erläutert. Auf einer lichtempfindlichen Fläche des Lichtempfängers 32 ist ein als Empfangszone 46 bezeichneter Teilbereich als grau gefülltes Rechteck dargestellt. Diese Empfangszone 46 korrespondiert hier zu einem (virtuellen) entsprechenden großen, über seine gesamte Ausdehnung remittierten Sendelichtfleck und kann daher auch als ein "Sichtfeld" für ggf. anwesende Objekte angesehen werden. Nur Objekte, die sich innerhalb dieses "Sichtfelds" befinden, können erfasst werden. Ein (z.B. kreisförmiges) Objekt, dass sich innerhalb dieses "Sichtfelds", jedoch außerhalb der optischen Achse der Empfangsoptik OAE befindet und von einem solchen Sendelichtfleck beleuchtet wird, erzeugt somit den (kreisförmigen) Empfangslichtfleck 14 sowie ein zugehöriges Geisterabbild 16 des Empfangslichtflecks 14 Das Geisterabbild 16 führt unter Umständen zu Fehlerfassungen von Objekten.

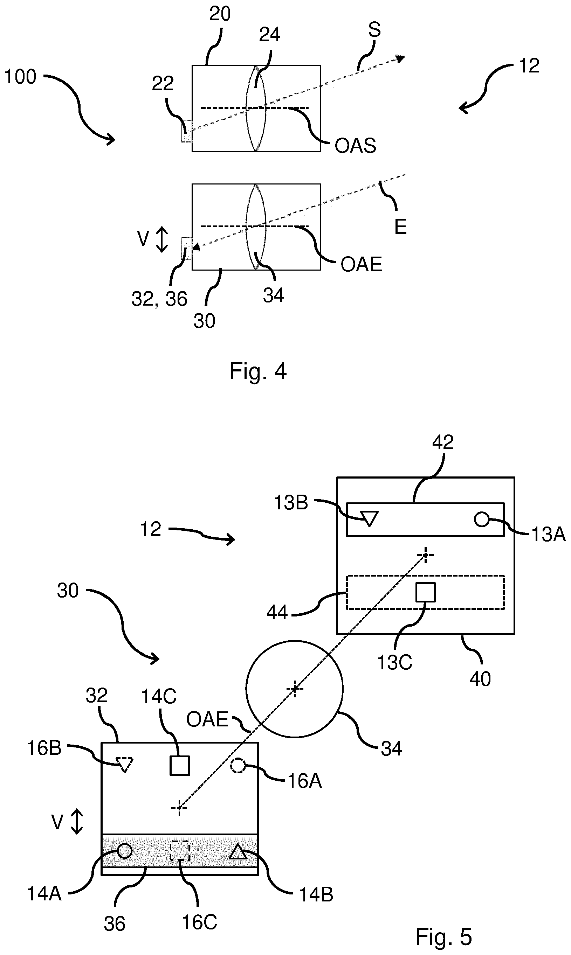

Mit Bezug auf Fig. 4 wird nachfolgend ein Distanzsensor 100 gemäß einem Ausführungsbeispiel beschrieben. Im Folgenden werden nur die wesentlichen Unterschiede gegenüber der Darstellung von Fig. 2 erläutert.

Bei dem Distanzsensor 100 sind im Vergleich zum Distanzsensor 10 von Fig. 2 sowohl die Lichtquelle 22 als auch der Lichtempfänger 32 um ein bestimmtes Maß in einer Versatzrichtung V relativ zu der optischen Achse der Sendeoptik OAS bzw. zu der optischen Achse der Empfangsoptik OAE versetzt angeordnet.

Durch das Versetzen der Lichtquelle 22 bzw. des Lichtempfängers 32 in der Versatzrichtung V verlaufen der Sendelichtpfad S und der Empfangslichtpfad E im Vergleich zur Darstellung von Fig. 2 schräg zu den optischen Achsen OAS bzw. OAE, wobei die betreffenden Winkel hier nur rein schematisch dargestellt sind und je nach Geometrie auch größer oder kleiner als die Winkel in der Darstellung von Fig. 4 sein können. Während der Empfangslichtfleck 14 auf den Lichtempfänger 12 trifft, ist dessen Geisterabbild 16 in Richtung der Versatzrichtung V nach oben verschoben und gelangt nicht mehr auf den Lichtempfänger 32. In entsprechender Weise werden im Sendelichtpfad auch der auf ein im Überwachungsbereich anwesendes Objekt projizierte Sendelichtfleck und dessen Geisterabbild auseinandergezogen. Die Ausrichtung der Sendeanordnung 20 und der Empfangsanordnung 30 erfolgt hierbei so, dass lediglich der Sendelichtfleck in das Sichtfeld der Empfangsanordnung 30 fällt, dessen Geisterbild jedoch außerhalb des Sichtfelds liegt und deshalb nicht erfasst wird.

Gemäß einer ebenfalls erfindungsgemäßen Abwandlung kann anstelle einer - wie vorstehend bereits beschriebenen - mechanischen Verschiebung des gesamten Lichtempfängers 32 auch lediglich die lichtempfindliche Fläche 36 in der Versatzrichtung V versetzt zur optischen Achse der Empfangsoptik OAE angeordnet werden. Das versetzte Anordnen der lichtempfindlichen Fläche 36 beruht bei der Abwandlung darauf, dass nur die innerhalb einer ausgewählten lichtempfindlichen Fläche 36 vorhandenen Empfängerelemente des gegebenenfalls größerflächigen Lichtempfängers 32 aktiviert, ausgelesen oder bei der Auswertung berücksichtigt werden.

Eine dieser Abwandlung entsprechende perspektivische Ansicht auf die Empfangsanordnung 30 ist in Fig. 5 dargestellt. Mit Bezug auf Fig. 5 wird ergänzend die Funktionsweise des der Erfindung zugrunde liegenden Prinzips erläutert.

Durch die Verschiebung der lichtempfindlichen Fläche 36 in der Versatzrichtung V liegt diese außerhalb des Schnittpunkts des Lichtempfängers 32 mit der optischen Achse der Empfangsoptik OAE.

Im Überwachungsbereich 12 ist eine virtuelle Hilfsfläche 40 dargestellt, welche orthogonal zur optischen Achse der Empfangsoptik OAE verläuft. Die virtuelle Hilfsfläche 40 soll als Definitionsgrundlage für die nachfolgend beschriebenen geometrischen, auf den Prinzipien der Strahlenoptik beruhenden Bedingungen dienen. Ihr Abstand zur Empfangsanordnung 30 kann innerhalb eines des vorgegebenen Arbeitsabstandsbereichs grundsätzlich frei gewählt werden.

Innerhalb der Hilfsfläche 40 ist ein erfassbarer Sichtbereich 42 dargestellt, der als eine Teilfläche der Hilfsfläche 40 aufgefasst werden kann, welche durch eine virtuelle, mittels der Empfangsoptik 34 erzeugte Rückprojektion der Kontur der lichtempfindlichen Fläche 36 auf die virtuelle Hilfsfläche 40 umgrenzt ist. Der Sichtbereich 42 zeichnet sich dadurch aus, dass nur diejenigen Sendelichtsignale, die an einer sich innerhalb des Sichtbereichs 42, d.h. der Rückprojektion der lichtempfindlichen Fläche 36, befindenden Objektoberfläche remittiert werden, auf die lichtempfindliche Fläche 36 treffen und erfasst werden können. Gemäß den Gesetzen der geometrischen Optik hängt die Größe des erfassbaren Sichtbereichs 42 vom jeweiligen Objektabstand ab.

Sinnvollerweise wird die Sendeanordnung (in Fig. 5 nicht dargestellt) derart konfiguriert, dass der von ihr erzeugte Sendelichtfleck den gesamten Sichtbereich 42 vollständig oder zumindest zum Großteil ausleuchtet.

Zum leichteren Verständnis sind in Fig. 5 Objekte 13A -13C mit unterschiedlichen Konturen dargestellt, die sich innerhalb der Hilfsebene 40 befinden. Werden diese Objekte13A -13C mit einem Sendelichtfleck beleuchtet, erzeugt die Empfangsoptik 34 aus dem remittierten Sendelicht entsprechende Empfangslichtflecke 14A - 14C als Abbilder der Objekte13A - 13C auf dem Lichtempfänger 32. Durch unerwünschte Reflexionen an bzw. in der Empfangsoptik 34 können Geisterabbilder 16A - 16C entstehen, deren Position und Lage auf dem Lichtempfänger 32 punktsymmetrischen Abbildungen der Empfangslichtflecke 14A - 14C in der Erstreckungsebene des Lichtempfängers 32 entsprechen, wobei der Symmetriepunkt dieser Abbildungen durch den Schnittpunkt der optischen Achse der Empfangsoptik OAE mit dem Lichtempfänger 32 bzw. dessen Erstreckungsebene gegeben ist.

Es sind dem kreisförmigen Objekt 13A der Empfangslichtfleck 14A und das Geisterabbild 16A, dem dreieckigen Objekt 13B der Empfangslichtfleck 14B und das Geisterabbild 16B und dem quadratischen Objekt 13C der Empfangslichtfleck 14C und das Geisterabbild 16C zugeordnet.

Die innerhalb des Sichtbereichs 42 gelegenen Objekte 13A, 13B werden auf die lichtempfindliche Fläche 36 abgebildet. Aufgrund des erfindungsgemäßen Relativversatzes zwischen der lichtempfindlichen Fläche 36 und der Empfangsoptik 34 fallen jedoch die zugehörigen Geisterabbilder 16A, 16B auf Bereiche des Lichtempfängers 32, die außerhalb der lichtempfindlichen Fläche 36 liegen und deshalb auch nicht erfasst oder zumindest bei der Auswertung nicht berücksichtigt werden.

Damit eine Erfassung von Geisterabbildern zuverlässig vermieden werden kann, muss eine sinnvolle Begrenzung des Sendelichtflecks gewährleistet werden. Dies wird anhand des Objekts 13C näher erläutert. Das Objekt 13C befindet sich außerhalb des Sichtbereichs 42, so dass der zugehörige Empfangslichtfleck 14C nicht auf die lichtempfindliche Fläche 36 fällt. Aufgrund der Punktsymmetrie liegt das zugehörige Geisterabbild 16C jedoch innerhalb der der lichtempfindlichen Fläche 36 und führt dort zu unerwünschten Fehlerfassungen.

Daher sollte der Sendelichtfleck so begrenzt werden, dass bestimmte Bereiche auf der Hilfsfläche 40 nicht beleuchtet werden. Vorteilhafterweise wird der Sendefleck so begrenzt, dass er im Wesentlichen nur den Sichtbereich 42 ausleuchtet. Insbesondere sollte aber vermieden werden, dass Sendelicht in einen Komplementärbereich 44 fällt, welcher durch eine Punktspiegelung des erfassbaren Sichtbereichs 42 am Schnittpunkt der optischen Achse der Empfangsoptik OAE mit der Hilfsfläche 40 definiert ist. Aus Fig. 5 wird ersichtlich, dass bei fehlender Ausleuchtung des Komplementärbereichs 44 auch kein Geisterabbild 16C des Objekts 13C auf der lichtempfindlichen Fläche 36 entstehen kann.

Der Sichtbereich 42 und der Komplementärbereich 44 sind jeweils als rechteckige Bereiche dargestellt. Die Empfangsoptik 34 kann den Sichtbereich 42 und den Komplementärbereich 44 bei der (gedachten) Rückprojektion der lichtempfindlichen Fläche 36 aufgrund des verkippten Empfangslichtpfads E aber möglicherweise auch verzeichnen (kissen- oder tonnenförmige Verzeichnung). Deshalb müssen der Sichtbereich 42 und der Komplementärbereich 44 nicht zwingend rechteckig sein, sondern können beispielsweise eine bananenförmig verzerrte Kontur aufweisen. Eine entsprechende Verzeichnung kann auch bei der Erzeugung des Sendelichtflecks auftreten. Durch eine komplementäre Ausgestaltung der Sendeanordnung (z.B. gleicher Versatz, Sende- und Empfangsoptik gleich) kann dies für eine vorteilhafte Abstimmung der Form des Sendelichtflecks auf die Form des Sichtbereichs 42 genutzt werden.

Gemäß einer Abwandlung zum Beispiel des Distanzsensors 100 von Fig. 4 (oder in entsprechender Weise bei einer Anordnung, bei die lichtempfindliche Fläche 36 durch aktivierte Lichtelemente der Lichtempfängers 32 definiert ist) kann die dort gezeigte Ausgestaltung der Empfangsanordnung 30 mit der (herkömmlichen) Ausgestaltung der Sendeanordnung 20 des Distanzsensors 10 (Fig. 2) kombiniert werden, d.h. der genannte Versatz ist nur bei der Empfangsanordnung 30 vorgesehen, nicht jedoch bei der Sendeanordnung 20.

Zum besseren Verständnis wurde in den gezeigten Ausführungsbeispielen der Relativversatz zwischen der Lichtquelle 22 und der Sendeoptik 24 bzw. der Relativversatz zwischen dem Lichtempfänger 32 bzw. der lichtempfindlichen Fläche 36 und der Empfangsoptik 34 durch ein Versetzen der Lichtquelle 22 und des Lichtempfängers 32 bzw. der lichtempfindlichen Fläche 36 erzeugt. Alternativ oder zusätzlich kann gemäß weiteren Abwandlungen der Relativversatz auch durch ein Versetzen der Sende- bzw. Empfangsoptik 24, 34 erzeugt werden.

Sowohl beim Ausführungsbeispiel als auch dessen Abwandlungen können die durch die relativen Versetzungen bedingten Richtungsänderungen der Lichtpfade E, S durch ein entsprechendes Verschwenken der Sendeanordnung 20 bzw. der Empfangsanordnung 30 kompensiert werden.

### Bezugszeichenliste

- 10, 100: Distanzsensor
- 12: Überwachungsbereich
- 13A - 13C: Objekt
- 14, 14A - 14C: Empfangslichtfleck
- 16, 16A - 16C: Geisterabbild
- 20: Sendeanordnung
- 22: Lichtquelle
- 24: Sendeoptik
- 30: Empfangsanordnung
- 32: Lichtempfänger
- 34: Empfangsoptik
- 36: lichtempfindliche Fläche
- 40: Hilfsfläche
- 42: Sichtbereich
- 44: Komplementärbereich
- 46: Empfangszone

- E: Empfangslichtpfad
- S: Sendelichtpfad
- OAE: optische Achse des Empfangslichtpfads
- OAS: optische Achse des Sendelichtpfads
- V: Versatzrichtung

## Patentansprüche

1. Distanzsensor (10, 100) zum Erfassen von Objekten (13A - 13C) in einem Überwachungsbereich (12),
mit einer Sendeanordnung (20) zum Aussenden von Sendelichtsignalen entlang eines Sendelichtpfads (S) in den Überwachungsbereich (12), wobei mit einer Empfangsanordnung (30), umfassend eine Empfangsoptik (34), welche eine optische Achse (OAE) aufweist und zum Fokussieren von Empfangslichtsignalen, die von einem im Überwachungsbereich (12) anwesenden Objekt (13A - 13C) durch Remission auftreffender Sendelichtsignale erzeugt werden und sich zwischen dem Objekt (13A - 13C) und der Empfangsanordnung (30) entlang eines Empfangslichtpfads (E) ausbreiten, in einen Empfangslichtfleck (14A - 14C) eingerichtet ist, und einen Lichtempfänger (32), welcher eine lichtempfindliche Fläche (36) aufweist und zum Detektieren des Empfangslichtflecks (14A - 14C) eingerichtet ist,
mit einer mit dem Lichtempfänger (32) verbundenen Auswerteeinheit, welche dazu eingerichtet ist, eine Distanz des erfassten Objekts (13A - 13C) von dem Distanzsensor (10, 100) in Abhängigkeit von der Lichtlaufzeit der ausgesendeten und empfangenen Lichtsignale zu ermitteln,
**dadurch gekennzeichnet,**
**dass** die lichtempfindliche Fläche (36) und die Empfangsoptik (34) quer zu der optischen Achse der Empfangsoptik (OAE) relativ zueinander derart versetzt angeordnet sind, dass die optische Achse der Empfangsoptik (OAE) die lichtempfindliche Fläche (36) nicht schneidet, so dass ein oder mehrere Geisterabbilder (16A - 16C) des Empfangslichtflecks (14A - 14C), welche durch unerwünschte Reflexionen der Empfangslichtsignale an Grenzflächen der Empfangsoptik (34) erzeugt werden, zumindest innerhalb eines vorgegebenen Arbeitsabstandsbereichs nicht auf die lichtempfindliche Fläche (36) treffen.

2. Distanzsensor (10, 100) nach Anspruch 1,
**dadurch gekennzeichnet,**
**dass** auf einer jeweiligen virtuellen, senkrecht zu der optischen Achse der Empfangsoptik (OAE) verlaufenden Hilfsfläche (40) ein erfassbarer Sichtbereich (42) derart definiert ist, dass alle innerhalb des erfassbaren Sichtbereichs (42) erzeugten Empfangslichtsignale auf die lichtempfindliche Fläche (36) treffen und alle außerhalb des erfassbaren Sichtbereichs (42) erzeugten Empfangslichtsignale nicht auf die lichtempfindliche Fläche (36) treffen, und
**dass** die Sendeanordnung (20) derart konfiguriert ist, dass zumindest innerhalb des vorgegebenen Arbeitsabstandsbereichs die Sendelichtsignale im Wesentlichen innerhalb des erfassbaren Sichtbereichs (42) auf die virtuelle Hilfsfläche (40) treffen.

3. Distanzsensor (10, 100) nach Anspruch 1 oder 2,
**dadurch gekennzeichnet,**
**dass** auf einer jeweiligen virtuellen, senkrecht zu der optischen Achse der Empfangsoptik (OAE) verlaufenden Hilfsfläche (40) ein erfassbarer Sichtbereich (42) derart definiert ist, dass alle innerhalb des erfassbaren Sichtbereichs (42) erzeugten Empfangslichtsignale auf die lichtempfindliche Fläche (36) treffen und alle außerhalb des erfassbaren Sichtbereichs (42) erzeugten Empfangslichtsignale nicht auf die lichtempfindliche Fläche (36) treffen, und
**dass** die Sendeanordnung (20) derart konfiguriert ist, dass zumindest innerhalb des vorgegebenen Arbeitsabstandsbereichs keine Sendelichtsignale innerhalb eines Komplementärbereichs (44) auf die virtuelle Hilfsfläche (40) treffen, wobei der Komplementärbereich (44) durch eine Punktspiegelung des erfassbaren Sichtbereichs (42) am Schnittpunkt der optischen Achse der Empfangsoptik (OAE) mit der virtuellen Hilfsfläche (40) definiert ist.

4. Distanzsensor (10, 100) nach einem der vorhergehenden Ansprüche,
**dadurch gekennzeichnet,**
**dass** das Maß eines Versatzes zwischen der lichtempfindlichen Fläche (36) und der optischen Achse der Empfangsoptik (OAE) veränderbar ist, wobei das versetzte Anordnen bevorzugt durch ein Versetzen der lichtempfindlichen Fläche (36) und/oder der Empfangsoptik (34) bewirkbar ist.

5. Distanzsensor (10, 100) nach einem der vorhergehenden Ansprüche,
**dadurch gekennzeichnet,**
**dass** das versetzte Anordnen der lichtempfindlichen Fläche (36) bezüglich der optischen Achse der Empfangsoptik (OAE) durch ein versetztes Anordnen des Lichtempfängers (32) bewirkt ist.

6. Distanzsensor (10, 100) nach einem der Ansprüche 1 bis 5,
**dadurch gekennzeichnet,**
**dass** der Lichtempfänger (32) eine Vielzahl von wahlweise aktivierbaren oder deaktivierbaren Empfangselementen aufweist, wobei die lichtempfindliche Fläche (36) durch eine Gesamtheit der aktivierten Empfangselemente gebildet ist, und wobei das versetzte Anordnen der lichtempfindlichen Fläche (36) bezüglich der optischen Achse der Empfangsoptik (OAE) durch Aktivieren nur einer Teilmenge der Empfangselemente bewirkt ist.

7. Distanzsensor (10, 100) nach einem der der vorhergehenden Ansprüche,
**dadurch gekennzeichnet,**
**dass** die Sendeanordnung (20) eine Lichtquelle (22) und eine Sendeoptik (24) umfasst, welche eine optische Achse (OAS) aufweist, und dass die Lichtquelle (22) und die Sendeoptik (24) quer zu der optischen Achse der Sendeoptik (OAS) derart relativ zueinander versetzt angeordnet sind, dass ein oder mehrere Geisterabbilder des Sendelichtflecks auf dem Objekt, welche durch unerwünschte Reflexionen der Sendelichtsignale an Grenzflächen der Sendeoptik (24) erzeugt werden, zumindest innerhalb eines vorgegebenen Arbeitsabstandsbereichs nicht von der Empfangsanordnung (30) erfasst werden.

8. Distanzsensor (10, 100) nach Anspruch 7,
**dadurch gekennzeichnet,**
**dass** das Maß eines Versatzes zwischen der Lichtquelle (22) und der optischen Achse der Sendeoptik (OAS) veränderbar ist, wobei das versetzte Anordnen bevorzugt durch ein Versetzen der Lichtquelle (22) und/oder der Sendeoptik (24) bewirkbar ist.

9. Distanzsensor (10, 100) nach einem der vorhergehenden Ansprüche,
**dadurch gekennzeichnet,**
**dass** der Sendelichtpfad (S) und die optische Achse der Sendeoptik (OAS) einen Sendewinkel und der Empfangslichtpfad (E) und die optische Achse der Empfangsoptik (OAE) einen Empfangswinkel einschließen, wobei der Sendewinkel und der Empfangswinkel gleich groß sind.

10. Distanzsensor (10, 100) nach einem der vorhergehenden Ansprüche,
**dadurch gekennzeichnet,**
**dass** der Distanzsensor (10, 100) als scannender Sensor ausgebildet ist, wobei zumindest der Sendelichtpfad (S), bevorzugt auch der Empfangslichtpfad (E), um zumindest eine Drehachse rotierbar und/oder verschwenkbar ist.

11. Verfahren zum Justieren und/oder Betreiben eines Distanzsensors (10, 100), welcher zum Erfassen von Objekten (13A - 13C) in einem Überwachungsbereich (12) eingerichtet ist und umfasst:
eine Sendeanordnung (20) zum Aussenden von Sendelichtsignalen entlang eines Sendelichtpfads (S) in den Überwachungsbereich (12), und
eine Empfangsanordnung (30), umfassend eine Empfangsoptik (34), welche eine optische Achse (OAE) aufweist und zum Fokussieren von Empfangslichtsignalen, die von einem im Überwachungsbereich (12) anwesenden Objekt (13A - 13C) durch Remission auftreffender Sendelichtsignale erzeugt werden und sich zwischen dem Objekt (13A - 13C) und der Empfangsanordnung (30) entlang eines Empfangslichtpfads (E) ausbreiten, in einen Empfangslichtfleck (14A - 14C) eingerichtet ist, und einen Lichtempfänger (32), welcher eine lichtempfindliche Fläche (36) aufweist und zum Detektieren des Empfangslichtflecks (14A - 14C) eingerichtet ist,
wobei der Distanzsensor (10, 100) eine Distanz des erfassten Objekts (13A - 13C) von dem Distanzsensor (10, 100) in Abhängigkeit von der Lichtlaufzeit der ausgesendeten und empfangenen Lichtsignale ermittelt, wobei die lichtempfindliche Fläche (36) und die Empfangsoptik (34) quer zu der optischen Achse der Empfangsoptik (OAE) derart relativ zueinander versetzt angeordnet werden, dass die optische Achse der Empfangsoptik (OAE) die lichtempfindliche Fläche (36) nicht schneidet, so dass ein oder mehrere Geisterabbilder (16A - 16C) des Empfangslichtflecks (14A - 14C), welche durch unerwünschte Reflexionen der Empfangslichtsignale an Grenzflächen der Empfangsoptik (34) erzeugt werden, zumindest innerhalb eines vorgegebenen Arbeitsabstandsbereichs nicht auf die lichtempfindliche Fläche (36) treffen.

12. Verfahren nach Anspruch 11,
**dadurch gekennzeichnet,**
**dass** der Lichtempfänger (32) eine Vielzahl von wahlweise aktivierbaren oder deaktivierbaren Empfangselementen aufweist und das versetzte Anordnen der lichtempfindlichen Fläche (36) bezüglich der optischen Achse der Empfangsoptik (OAE) durch Aktivieren nur einer Teilmenge der Empfangselemente bewirkt wird.

13. Verfahren nach einem der Ansprüche 11 oder 12,
**dadurch gekennzeichnet,**
**dass** auf einer jeweiligen virtuellen, senkrecht zu der optischen Achse der Empfangsoptik (OAE) verlaufenden Hilfsfläche (40) ein erfassbarer Sichtbereich (42) derart definiert wird, dass alle innerhalb des erfassbaren Sichtbereichs (42) erzeugten Empfangslichtsignale auf die lichtempfindliche Fläche (36) treffen und alle außerhalb des erfassbaren Sichtbereichs (42) erzeugten Empfangslichtsignale nicht auf die lichtempfindliche Fläche (36) treffen, dass zumindest innerhalb des vorgegebenen Arbeitsabstandsbereichs die Sendelichtsignale im Wesentlichen innerhalb des erfassbaren Sichtbereichs (42) auf die virtuelle Hilfsfläche (40) treffen, und
**dass** die Sendeanordnung (20) eine Lichtquelle (22) und eine Sendeoptik (24) umfasst, welche eine optische Achse aufweist, wobei die Lichtquelle (22) und die Sendeoptik (24) quer zu der optischen Achse der Sendeoptik (OAS) derart relativ zueinander versetzt angeordnet werden, dass ein oder mehrere Geisterabbilder (16A - 16C) des Sendelichtflecks auf dem Objekt, welche durch unerwünschte Reflexionen der Sendelichtsignale an Grenzflächen der Sendeoptik (24) erzeugt werden, zumindest innerhalb eines vorgegebenen Arbeitsabstandsbereichs nicht von der Empfangsanordnung (30) erfasst werden.
